# EUROPEAN PATENT SPECIFICATION

(11) **EP 4 043 974 B1**
(45) Date of publication and mention of the grant of the patent: **03.04.2024**
(21) Application number: 21156887.8
(22) Date of filing: 12.02.2021
(51) Int. Cl.: G05B 19/418, G05B 19/05

(54) **IMPROVING THE CONTROL STRATEGY OF DISTRIBUTED CONTROL SYSTEMS BASED ON OPERATOR ACTIONS**
VERBESSERUNG DER STEUERUNGSSTRATEGIE VON VERTEILTEN STEUERUNGSSYSTEMEN AUF DER BASIS VON BEDIENERAKTIONEN
AMÉLIORATION DE LA STRATÉGIE DE SYSTÈMES DE COMMANDE RÉPARTIE BASÉE SUR LES ACTIONS D'OPÉRATEUR

(43) Date of publication of application: 17.08.2022
(73) Proprietor: ABB Schweiz AG, 5400 Baden (CH)
(72) Inventor: RODRIGUEZ, Pablo, 68549 Ilvesheim (DE); DOPPELHAMER, Jens, 68526 Ladenburg (DE); KLOEPPER, Benjamin, 68199 Mannheim (DE); BORRISON, Reuben, 68775 Ketsch (DE); DIX, Marcel, 68167 Mannheim (DE); SCHMIDT, Benedikt, 69117 Heidelberg (DE); ABUKWAIK, Hadil, 69469 Weinheim (DE); KOTRIWALA, Arzam, 68526 Ladenburg (DE); MACZEY, Sylvia, 69493 Hirschberg (DE); ZIOBRO, Dawid, 72462 Västerås (SE); LINGE, Simon, 72356 Västerås (SE); GAERTLER, Marco, 69221 Dossenheim (DE); SHARMA, Divyasheel, 560048 Bangalore (IN); K R, Chandrika, 560078 Bangalore (IN); GOPALAKRISHNAN, Gayathri, 17171 Solna (SE); BERNING, Matthias, 67549 Worms (DE); BRAUN, Roland, 53859 Niederkassel Lülsdorf (DE)
(74) Representative: Maiwald GmbH

(56) References cited:
- WO-A1-2020/205974
- US-A1- 2016 161 930
- US-A1- 2018 136 910

## Description

### FIELD OF THE INVENTION

The present invention relates to automated control of industrial plants, and in particular plants with a distributed control system.

### BACKGROUND

Automated control of industrial plants is usually performed according to an engineered control strategy that is to conduct normal operation of the plant in an efficient manner. However, such an engineered control strategy cannot foresee all situations that might arise during operation of the plant. In such situations, a plant operator may manually intervene and take control of the plant or a part thereof, overriding the engineered control strategy.

WO 2012/142 353 A1 discloses a method for monitoring a process control system. The method comprises visualizing key performance indicators, KPI, of the plant that are unsatisfactory.

US 2016/161 930 A1 discloses a computer-implemented method for automatically exchanging data between a piping and instrumentation diagram (P&ID) and a control system. Based on the parsing of the P&ID, control loops for controlling one or more instruments by the control system are identified.

WO 2020/205 974 A1 discloses a system and method for user and entity behaviour analysis that can be applied to detect security and safety anomalies related to actions of process engineers and plant operators.

US 2018/136 910 A1 discloses systems and methods for generating programmable logic controller code based on a connectivity model in a multidisciplinary engineering system. The connectivity model provides interfaces and connections between various aspects of the multidisciplinary engineering system.

### OBJECTIVE OF THE INVENTION

It is an objective of the invention to reduce the need for manual interventions during operation of an industrial plant, and/or the amount of time a plant operator has to spend on these interventions.

This objective is achieved by two computer-implemented methods for amending and/or augmenting an engineering tool for a distributed control system according to independent claims, and by another computer-implemented method for training a machine learning model according to another independent claim.

### DISCLOSURE OF THE INVENTION

The invention is defined by the appended claims. Embodiments and examples not covered by the claims are presented to illustrate, and facilitate the understanding of, the claimed invention.

The invention provides a computer-implemented method for amending and/or augmenting an engineering tool. The engineering tool is configured to generate application code. When this application code is executed on one or more controllers in a distributed control system of an industrial plant, will cause the industrial plant to be controlled according to a control strategy that is implemented in the application code.

The method produces an amendment and/or augmentation for the engineering tool that has generated the application code for the distributed control system. When the application code is re-generated by the amended and/or augmented engineering tool and executed in the distributed control system, the effect of the amendment is that the plant operator is likely to manually interact with the distributed control system less frequently, and/or to spend less time interacting with the distributed control system.

The method obtains this amendment and/or augmentation based on past interaction events of a plant operator who interacts with the distributed control system of the plant via a human-machine interface. The method specifically facilitates the obtaining of the amendment and/or augmentation from particular known behavior patterns of a plant operator.

In the course of the method, state variables that characterize an operational state of at least one industrial plant are acquired. Also, a set of interaction events of at least one plant operator interacting with the distributed control system of the industrial plant via a human-machine interface are acquired.

Based at least in part on the interaction events, the state variables, and optionally given engineering information of the distributed control system as input data, it is determined whether one or more interaction events are indicative of the plant operator executing a task that is not sufficiently covered by the engineering of the distributed control system. If this determination is positive, the input data is mapped to the sought amendment and/or augmentation for the engineering tool that has generated the application code for the distributed control system.

Control systems are designed based on requirement specifications during the engineering phase. But during this engineering phase, not every situation that will occur during operation of the plant can be foreseen. A human plant operator remains in the control loop as an interactive part to fill any gaps in the engineered control strategy. If a rare situation that is not foreseen in the control strategy and not very likely to reoccur is handled by intervention of the plant operator, this is a better way to go than amending the control strategy to handle this situation as well. But if it is likely that the situation will occur again, it is better to amend the engineering of the plant, so as to relieve the plant operator from having to execute the same, or a substantially similar, intervention time and time again. If the engineering is amended in an automated manner, this has multiple advantages:
- The operation of the plant becomes safer because in every situation that can be handled automatically, correct operation no longer depends on the plant operator performing the right intervention at the appropriate time.
- Relieving the plant operator from routine interventions frees up time that would otherwise have been spent on these routine interventions for problem solving tasks that cannot be handled by machine.
- Knowledge of the plant operator is captured and documented in a form that is also transferable to similar plants.
- It may be measured quantitatively how well the engineering of the plant covers the operating situations that actually occur in the plant.

The task that is not sufficiently covered by the present engineering of the distributed control system may be specified as a pattern in any suitable manner. In a particularly advantageous embodiment, the task that is not sufficiently covered by the present engineering of the distributed control system specifically comprises:
- manually executing a solution to an operational problem that is not covered by the present engineering of the distributed control system; and/or
- repeatedly executing one or more actions starting from equal or substantially similar operating states; and/or
- accessing at least one functionality that requires at least a threshold number of steps to access with at least a threshold frequency.

For example, in a waste incineration plant, the combustion process is very much dependent on the composition of the waste. The plant is engineered for a certain range of compositions, but a significant change in the composition that goes beyond this engineering may occur abruptly. For example, paper, plastics or some other material may be a normal constituent of household waste, so the engineering of the plant may presume that this constituent is always present. But updated environmental regulations may suddenly prescribe that the paper or plastic is to be collected in a separate bin for recycling, and suddenly this constituent is gone from the household waste. The plant operator may then notice that the combustion suddenly takes a turn for the worse and figure out how to improve the combustion by tweaking the air flow and the agitation of the waste inside the furnace. If this solution is incorporated into an updated engineering tool, and the engineering of the plant is updated accordingly, this solution may be reused whenever waste of a similar composition is supplied to the plant in the future.

A situation where the plant operator has manually executed a solution to an operational problem may, for example, be detected by pattern recognition in state variable and interaction event data. For example, if there is a pattern where
- the state variables indicate a problematic or suboptimal state of the plant,
- a sequence of interaction events is subsequently detected, and
- in response to that, the state variables indicate an improvement in the state of the plant,
it may be inferred that the intervention by the plant operator has solved an operational problem in the plant.

If one or more actions are repeatedly executed starting from equal or substantially similar operating states, then the engineering tool may be amended such that according to the new application code produced by this tool, the one or more actions are executed automatically in the future in response to the same or substantially similar operating state occurring again. This relieves the plant operator of repetitive manual work, similar to a macro recorder in a word processing program.

If at least functionality that requires at least a threshold number of steps to access with at least a threshold frequency, then the engineering tool may be amended such that the functionality is accessible with a fewer number of steps. For example, an arrangement of controls and displays in a human-machine interface may be too large to fit on a screen, and it may therefore be divided into several pages. The human-machine interface may be on page 1 by default, and to access a functionality that is on page 5, the plant operator may have to flip to page 2, 3, 4 and then 5. The initial assignment of controls and displays to the different pages may be motivated by an estimated probability that a plant operator may need to access the respective control or display. But in certain instances of the plant, some controls and displays may become more important than in other instances of the plant. This may even change at run-time. For example, if multiple residential neighbors of a plant complain to municipal authorities about noise, smell or another nuisance emanating from the plant, the plant operator may be compelled to reduce this nuisance. The respective sensor readings will have to be monitored more frequently, so it may be appropriate to move them from page 5 to page 1 where they are visible on the screen most of the time.

In these examples, situations where an amendment of the engineering tool is appropriate may be detected by searching or watching for specific patterns in data from the plant. But there may be more instances where it may emerge that there are "gaps" in the previous engineering of the plant that have to be filled by interventions of the plant operator. The invention therefore also provides a second computer-implemented method for amending and/or augmenting the engineering tool.

Producing amendments and/or augmentations for the engineering tool in this manner does not require specific patterns for operating situations, and/or for interventions by a plant operator, to be known in advance. Rather, the engineering tool may learn from the plant operator dynamically, and may also adapt to new classes of situations that were not foreseeable at the time of the initial engineering.

For example, a waste incineration plant that was previously operating optimally with a certain engineering may later be connected to a district heating network such that heat generated in the plant may be put to another use. From then on, it may become necessary to keep the amount and temperature of heat delivered to the district heating network within predetermined ranges to keep up the reliability of the district heating. These new goals may at least partially supersede previous goals. For example, to keep up heat delivery in case the calorific value of the waste drops, it may become necessary to fire a fuel-powered burner to supplement the combustion of the waste. According to the previous engineering, as long as it is not necessary for continued operation of the waste incineration plant, the burner would not have been fired because the fuel adds to the operating cost. The training of the machine learning model may capture that after connection to the district heating network, manual interventions have become necessary in an increasing number of situations. After training, the machine learning model may predict in which operating situations a manual intervention is likely to come. The engineering tool may then be amended so that according to the newly generated application code, the intervention to keep up the heat delivery may be initiated automatically in the future.

The method may be active in one and the same plant at the same time. That is, if it is detected according to known patterns that the engineering tool needs amending and/or augmenting in some place, this amendment and/or augmentation may be determined and implemented. On top of that, a machine learning model may be used to generate amendments and/or augmentations from interventions that do not fit into a previously known pattern.

The input data that is used in the method may, for example, further comprise one or more of:
- alarms and events reported by the distributed control system;
- a topology model of the industrial plant;
- a layout of a human-machine interface of the distributed control system; and
- a control logic of the distributed control system.

If the input data is more detailed, then more elaborate patterns for the detection of "gaps" in the current engineering may be used, and/or the machine learning model may more accurately predict plant operator interventions.

In a further particularly advantageous embodiment, when the input data, and/or the interaction events, are mapped to the an amendment and/or augmentation for the engineering tool, it may be determined that a function in a given control library accomplishes a result that is substantially similar to the result of an action or sequence of actions that has been detected and/or predicted. In this case, the detected and/or predicted action or sequence of actions may be substituted with a call to the determined function in the control library when generating the amendment and/or augmentation for the engineering tool. In this manner, knowledge that has already been condensed in a control library may be put to use in appropriate situations. For example, a plant operator may follow a certain manual protocol for bringing the temperature inside a vessel to a new target temperature, not knowing that for such a standard action, an automated protocol has already been laid down in the control library.

In the present invention, the amendment and/or augmentation is configured to cause, when the application code is re-generated by the amended engineering tool and executed in the distributed control system, in a human-machine interface of the distributed control system,
- a new control element to appear such that a chain of actions that were previously executed by the plant operator repeatedly in sequence is executed upon actuation of this new control element; and/or
- a control element that previously required a first number of steps to access to move within the human-machine interface such that it requires a second, lower number of steps to access.

This enables the plant operator to accomplish the same intervention with fewer interactions between the plant operator and the human-machine interface of the distributed control system.

As discussed before, in the present invention, the amendment and/or augmentation for the engineering tool augmentation is configured to cause, when the application code is re-generated by the amended engineering tool and executed in the distributed control system, one or more actions that were previously executed by the plant operator repeatedly starting from equal or substantially similar operating states to be executed automatically in response to a particular operating state occurring. This may relieve the plant operator from routine interventions, allowing him to focus on problem solving tasks instead.

In a further advantageous embodiment, an engineering tool is chosen that is configured to assemble the distributed control system from building blocks in a predetermined catalogue. At least one such building block is a programmable logic controller, PLC. The engineering tool is configured to generate application code that comprises control code for this PLC. When such an engineering tool is amended and/or augmented, the assembly of the plant from building blocks may remain unchanged, but the control code for the PLC may be recompiled, thereby upgrading it with new functionality.

Thus, the claimed method also further comprises re-generating, by the amended and/or augmented engineering tool, application code for the distributed control system. The re-generated application code is then executed in the distributed control system. In this manner, the industrial plant is controlled according to the amended and/or augmented control strategy implemented in the re-generated application code.

Optionally, before the re-generating of the application code, a control engineer may be prompted for approval of the amendment and/or augmentation for the engineering tool. In this manner, the control engineer is made aware of what will change when the application code is re-generated the next time. Also, the control engineer is then able to check whether the proposed change violates any other constraints. For many types of plants, such as waste incineration plants, instances of these plants will differ from one another to some extent, but the basic functionality will be the same in all instances. Different instances of waste incineration plants may be fed with different compositions of waste. One waste incineration plant may be connected to a district heating network, while the other is not. But all instances have in common that there is a furnace of a certain type for combustion of the waste, and this combustion is controlled by manipulating a certain set of parameters.

The computer implementation of the methods described above implies that the methods may be embodied in a computer program. The invention therefore also provides a computer program with machine-readable instructions that, when executed by one or more computers, cause the one or more computers to perform one of the methods described above. The invention also provides a non-transitory machine-readable storage medium, and/or a download product, with the computer program. A download product is a product that may be sold in an online shop for immediate fulfillment by download. The invention also provides one or more computers with the computer program, and/or with the non-transitory machine-readable storage medium and/or download product.

### DESCRIPTION OF THE FIGURES

In the following, the invention is illustrated using Figures without any intention to limit the scope of the invention. The Figures show:
Figure 1: Exemplary embodiments of the methods 100a, 100b for amending and/or augmenting an engineering tool 2;
Figure 2: Exemplary flows of information according to methods 100a (Figure 2a) and 100b (Figure 2b);
Figure 3: Exemplary embodiment of the method 200 for training a machine learning model 8 for use in the method 100b.

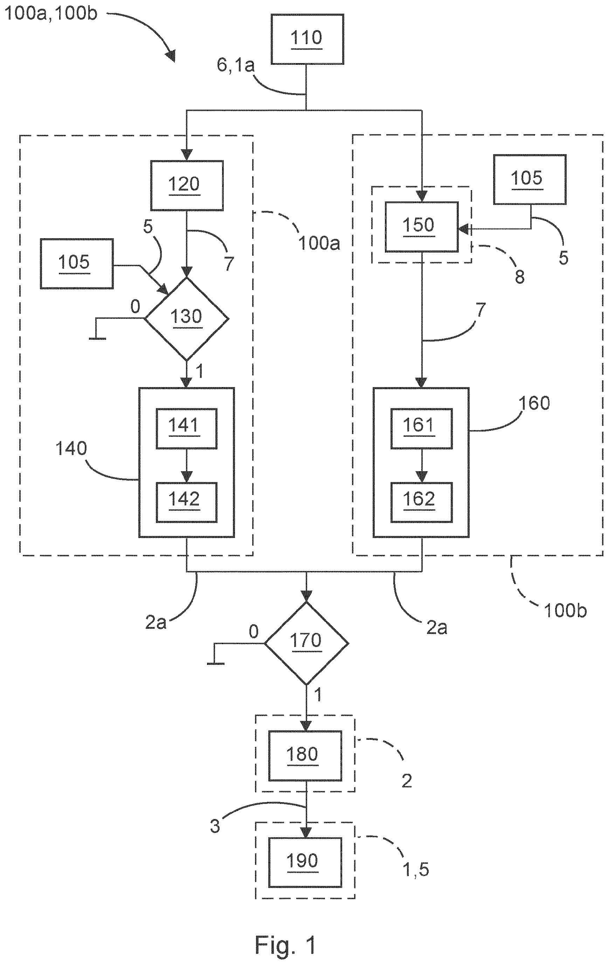

Figure 1 is a schematic flow chart of an embodiment of the methods 100a, 100b for amending and/or augmenting an engineering tool 2. Both methods 100a, 100b start with acquiring state variables 6 that characterize an operational state 1a of at least one industrial plant 1 in step 110.

In the course of method 110a, in step 120, a set of interaction events 7 of at least one plant operator interacting with the distributed control system 5 of the industrial plant 1 via a human-machine interface is acquired. In step 130, based at least in part on the interaction events 7, the state variables 6, and optionally given engineering information of the distributed control system 5, as input data, it is determined whether one or more interaction events 7 are indicative of the plant operator executing a task that is not sufficiently covered by the present engineering of the distributed control system 5. If this is the case (truth value 1), in step 140, the input data is mapped to an amendment and/or augmentation 2a for the engineering tool 2 that has generated the application code 3 for the distributed control system 5.

In the course of method 11 0b, in step 150, based on the state variables 6, one or more interaction events 7 that at least one plant operator is likely to initiate on the distributed control system 5 via a human-machine interface in response to the operational state 1a of the plant 1 is predicted using at least one machine learning model 8. In step 160, the one or more predicted interaction events 7 are mapped to an amendment and/or augmentation 2a for the engineering tool 2 that has generated the application code 3 for the distributed control system 5.

During the mapping 140, 160, performed in either method 110a or 100b, according to block 141 (respectively 161), a function in a given control library that accomplishes a result substantially similar to the result of a detected and/or predicted action or sequence of actions may be determined. According to block 142, respectively 162, this action or sequence of actions may be substituted with a call to the determined function in the control library. In this manner, if the plant operator does something manually for which there is already a library function available, the tried-and-tested library function is used.

According to block 105, for both methods 100a and 100b, an engineering tool 2 may be chosen that is configured to:
- assemble the distributed control system (5) from building blocks in a predetermined catalogue, wherein at least one such building block is a programmable logic controller, PLC; and
- generate application code that comprises control code for this PLC.

In the course of both methods 100a and 100b, the amendment 2a for the engineering tool 2 may be presented to a control operator for approval in step 170. If approval is granted (truth value 1), the engineering tool 2 may re-generate the application code 3 for the distributed control system 5 in step 180. In step 190, this re-generated application code 3 may be executed in the distributed control system 5. This results in the industrial plant 1 being controlled according to the updated control strategy implemented in the re-generated application code 3.

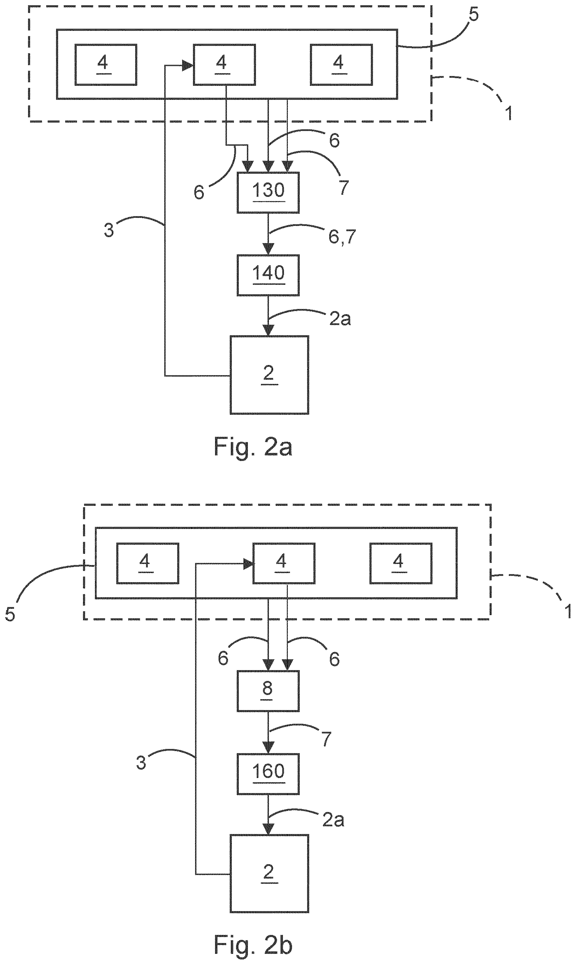

This flow of information is further detailed in Figure 2a for method 100a and in Figure 2b for method 100b.

According to Figure 2a, state variables 6 from controllers 4 in the distributed control system 5, and from this control system 5 as a whole, are acquired. Also, interaction events 7 of at least one plant operator interacting with the control system 5 are acquired. Based on the state variables 6 and the one or more interaction events 7, it is determined in step 130 of method 100a whether this is indicative of the plant operator executing a task that is not sufficiently covered by the present engineering of the distributed control system 5. In step 140 of method 100a, the state variables 6 and interaction events 7 are mapped, using a machine learning model, a lookup table, or any other suitable instrument, to the sought amendment and/or augmentation 2a for the engineering tool 2. When this amendment and/or augmentation is implemented, the engineering tool 2 may generate new application code 3 that may then be run on controllers 4 in the distributed control system 5.

According to Figure 2b, state variables 6 from controllers 4 in the distributed control system 5, and from this control system 5 as a whole, are acquired. Based on the state variables 6, at least one machine learning model 8 predicts one or more interaction events 7 that at least one plant operator is likely to initiate on the distributed control system 5. These predicted interaction events 7 are mapped to the sought amendment and/or augmentation 2a for the engineering tool 2 in step 160 of method 100b. When this amendment and/or augmentation is implemented, the engineering tool 2 may generate new application code 3 that may then be run on controllers 4 in the distributed control system 5.

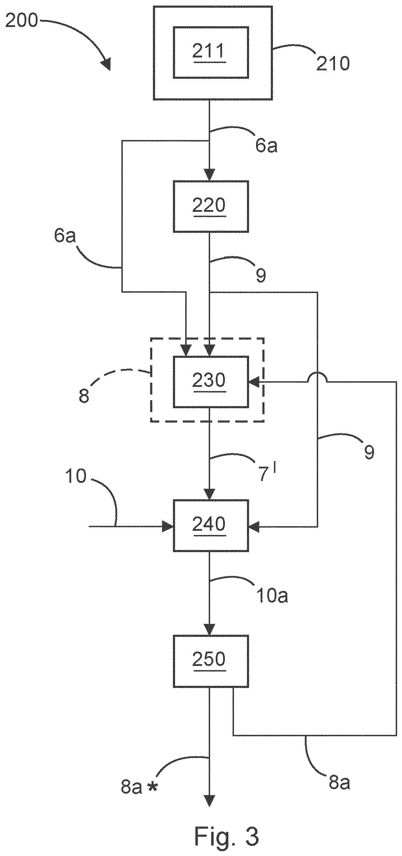

Figure 3 is a schematic flow chart of an embodiment of the method 200 for training a machine learning model 8. In step 210, records 6a of training input data with state variables 6 that characterize an operational state 1a of the at least one industrial plant 1 are provided. In step 220, labels 9 as to which interaction events 7 at least one plant operator has initiated in the distributed control system 5 in response to said operational states 1a are provided.

In step 230, the records 6a of training input data are mapped to predictions 7' of one or more interaction events 7 that at least one plant operator will initiate in response to the operational states 1a in the training input data by the to-be-trained machine learning model 8. In step 240, it is rated, by means of a predetermined cost function 10, how well this prediction 7' corresponds to the label 9 of the respective record 6a of training input data. In step 250, parameters 8a that characterize the behavior of the machine learning model 8 are optimized towards the goal that when further records 6a of training input data are processed by the machine learning model 8, this will result in a better rating 10a by the cost function 10. The finally obtained trained state of the parameters 8a is labelled with the reference sign 8a*.

### List of reference signs

- 1: industrial plant
- 1a: operational state of industrial plant 1
- 2: engineering tool for distributed control system 5
- 2a: amendment/augmentation for engineering tool 2
- 3: application code for distributed control system 5
- 4: controllers in distributed control system 5
- 5: distributed control system
- 6: state variables that characterize operational state 1a
- 6a: training data record with state variables 6
- 7: interaction events between plant operator and control system 5
- 7': prediction of interaction events 7 during training of model 8
- 8: machine learning model
- 8a: parameters, characterize behavior of machine learning model 8
- 8a*: finally trained state of parameters 8a
- 9: labels for training data records 6a
- 10: cost function for training of machine learning model 8
- 10a: rating by cost function 10
- 100a: method for obtaining amendment 2a based on patterns
- 100b: method for obtaining amendment 2a based on interaction learning
- 105: choosing particular distributed control system 5
- 110: acquiring state variables 6
- 120: acquiring interaction events 7
- 130: determining execution of non-covered task
- 140: mapping input data to amendment/augmentation 2a
- 141: determining control library function
- 142: using library function instead of manual action
- 150: predicting interaction events 7
- 160: mapping predicted interaction events to amendment/augmentation 2a
- 161: determining control library function
- 162: using library function instead of manual action
- 170: submitting amendment 2a for approval by control engineer
- 180: re-generating application code 3
- 190: executing new application code 3
- 200: method for training machine learning model 8
- 210: providing records 6a of training input data
- 211: acquiring records 6a from multiple plants 1
- 220: providing labels 9
- 230: mapping records 6a to predictions 7'
- 240: rating prediction 7' using cost function 10
- 250: optimizing parameters 8a

## Claims

1. A computer-implemented method (100a) for amending and/or augmenting an engineering tool (2) that is configured to generate application code (3) which, when executed on one or more controllers (4) in a distributed control system (5) of an industrial plant (1), will cause the industrial plant (1) to be controlled according to a control strategy that is implemented in the application code (3), the method comprising:
• acquiring (110) state variables (6) that characterize an operational state (1a) of at least one industrial plant (1);
• acquiring (120) a set of interaction events (7) of at least one plant operator interacting with the distributed control system (5) of the industrial plant (1) via a human-machine interface;
• determining (130), based at least in part on the interaction events (7), the state variables (6) and optionally given engineering information of the distributed control system (5) as input data, whether one or more interaction events (7) are indicative of the plant operator executing a task that is:
• manually executing a solution to an operational problem that is not covered by the present engineering of the distributed control system (5); and/or
• repeatedly executing one or more actions starting from equal or substantially similar operating states (1a); and/or
• accessing at least one functionality that requires at least a threshold number of steps to access with at least a threshold frequency;
• and if this determination is positive, mapping (140) the input data to an amendment and/or augmentation (2a) for the engineering tool (2) that has generated the application code (3) for the distributed control system (5), and further
• re-generating (180), by the amended and/or augmented engineering tool (2), application code (3) for the distributed control system (5), and
• executing (190) the re-generated application code (3) in the distributed control system (5), thereby controlling an industrial plant (1) according to the control strategy implemented in the re-generated application code (3),
such that
• a new control element appears in a human-machine interface of the distributed control system (5) such that a chain of actions that were previously executed by the plant operator repeatedly in sequence is executed upon actuation of this new control element; and/or
• a control element that previously required a first number of steps to access moves within the human-machine interface such that it requires a second, lower number of steps to access; and/or
• one or more actions that were previously executed by the plant operator repeatedly starting from equal or substantially similar operating states (1a) are executed automatically in response to a particular operating state (1a) occurring,
thereby causing that the plant operator is likely to manually interact with the distributed control system less frequently, and/or to spend less time interacting with the distributed control system.

2. The method (100a, 100b) of claim 1, wherein the input data further comprises one or more of:
• alarms and events reported by the distributed control system (5);
• a topology model of the industrial plant (1);
• a layout of a human-machine interface of the distributed control system (5); and
• a control logic of the distributed control system (5).

3. The method (100a, 100b) of any one of claims 1 to 2, wherein the mapping (140, 160) comprises:
• determining (141, 161) a function in a given control library that accomplishes a result substantially similar to the result of a detected action or sequence of actions; and
• substituting (142, 162), in the amendment and/or augmentation (2a) for the engineering tool (2), the detected action or sequence of actions with a call to the determined function in the control library.

4. The method (100a, 100b) of any one of claims 1 to 3, wherein an engineering tool (2) is chosen (105) that is configured to:
• assemble the distributed control system (5) from building blocks in a predetermined catalogue, wherein at least one such building block is a programmable logic controller, PLC; and
• generate application code that comprises control code for this PLC.

5. The method (100a, 100b) of any one of claims 1 to 4, further comprising: before the re-generating (180) of the application code (3) prompting (170) a control engineer for approval of the amendment and/or augmentation (2a) for the engineering tool (2).

6. A computer program, comprising machine-readable instructions that, when executed by one or more computers, cause the one or more computers to perform a method (100a, 100b) of any one of claims 1 to 5.

7. A non-transitory machine-readable storage medium, and/or a download product, with the computer program of claim 6.

8. One or more computers configured to execute the computer program of claim 6.

## Patentansprüche

1. Computerimplementiertes Verfahren (100a) zum Ändern und/oder Erweitern eines Engineering-Tools (2), das so konfiguriert ist, dass es einen Anwendungscode (3) erzeugt, der, wenn er auf einer oder mehreren Steuerungen (4) in einem verteilten Steuersystem (5) einer Industrieanlage (1) ausgeführt wird, bewirkt, dass die Industrieanlage (1) gemäß einer Steuerstrategie gesteuert wird, die in dem Anwendungscode (3) implementiert ist, wobei das Verfahren umfasst:
• Erfassen (110) von Zustandsgrößen (6), die einen Betriebszustand (1a) mindestens einer Industrieanlage (1) charakterisieren;
• Erfassen (120) eines Satzes von Interaktionsereignissen (7) von mindestens einem Anlagenbetreiber, der mit dem verteilten Steuerungssystem (5) der Industrieanlage (1) über eine Mensch-Maschine-Schnittstelle interagiert;
• Bestimmen (130), zumindest teilweise basierend auf den Interaktionsereignissen (7), den Zustandsvariablen (6) und optional gegebenen technischer Informationen des verteilten Steuerungssystems (5) als Eingangsdaten, ob ein oder mehrere Interaktionsereignisse (7) darauf hinweisen, dass der Anlagenbetreiber eine Aufgabe ausführt, die ist:
• manuelles Ausführen einer Lösung für ein betriebliches Problem, das nicht durch das vorliegende Engineering des verteilten Steuerungssystems (5) abgedeckt ist; und/oder
• wiederholtes Ausführen einer oder mehrerer Aktionen, ausgehend von gleichen oder im Wesentlichen ähnlichen Betriebszuständen (1a); und/oder
• Zugriff auf mindestens eine Funktion, die mindestens eine Schwellenzahl von Schritten erfordert, um auf sie zuzugreifen, mit mindestens einer Schwellenhäufigkeit;
• und, wenn diese Feststellung positiv ausfällt, Zuordnen (140) der Eingabedaten zu einer Änderung und/oder Erweiterung (2a) für das Engineering-Tool (2), das den Anwendungscode (3) für das verteilte Steuerungssystem (5) erzeugt hat,
und weiterhin
• erneutes Generieren (180) von Anwendungscode (3) für das verteilte Steuerungssystem (5) durch das geänderte und/oder erweiterte Engineering-Tool (2), und
• Ausführen (190) des neu erzeugten Anwendungscodes (3) in dem verteilten Steuerungssystem (5), wodurch eine Industrieanlage (1) gemäß der in dem neu erzeugten Anwendungscode (3) implementierten Steuerungsstrategie gesteuert wird,
derart, dass
• in einer Mensch-Maschine-Schnittstelle des verteilten Steuerungssystems (5) ein neues Bedienelement erscheint, so dass bei Betätigung dieses neuen Bedienelements eine Kette von Aktionen ausgeführt wird, die zuvor vom Anlagenbetreiber wiederholt nacheinander ausgeführt wurden; und/oder
• ein Steuerelement, das zuvor eine erste Anzahl von Schritten erforderte, um darauf zuzugreifen, sich innerhalb der Mensch-Maschine-Schnittstelle bewegt, so dass es eine zweite, geringere Anzahl von Schritten erfordert, um darauf zuzugreifen; und/oder
• eine oder mehrere Aktionen, die zuvor vom Anlagenbetreiber ausgehend von gleichen oder im Wesentlichen ähnlichen Betriebszuständen (1a) wiederholt ausgeführt wurden, automatisch als Reaktion auf das Eintreten eines bestimmten Betriebszustands (1a) ausgeführt werden,
so dass verursacht wird, dass der Anlagenbetreiber wahrscheinlich weniger häufig manuell mit dem verteilten Steuerungssystem interagiert und/oder weniger Zeit mit der Interaktion mit dem verteilten Steuerungssystem verbringt.

2. Verfahren (100a, 100b) nach Anspruch 1, wobei die Eingabedaten ferner eines oder mehrere der folgenden umfassen:
• Alarme und Ereignisse, die vom verteilten Steuerungssystem (5) gemeldet werden;
• ein Topologiemodell der Industrieanlage (1);
• ein Layout einer Mensch-Maschine-Schnittstelle des verteilten Steuerungssystems (5); und
• eine Steuerlogik des verteilten Steuerungssystems (5).

3. Verfahren (100a, 100b) nach einem der Ansprüche 1 bis 2, wobei das Zuordnen (140, 160) umfasst:
• Ermitteln (141, 161) einer Funktion in einer gegebenen Steuerungsbibliothek, die ein Ergebnis erzielt, das im Wesentlichen dem Ergebnis einer erfassten Aktion oder einer Folge von Aktionen ähnelt; und
• Ersetzen (142, 162), in der Änderung und/oder Erweiterung (2a) für das Engineering-Tool (2), der erkannten Aktion oder Aktionsfolge durch einen Aufruf der ermittelten Funktion in der Steuerungsbibliothek.

4. Verfahren (100a, 100b) nach einem der Ansprüche 1 bis 3, wobei ein Engineering-Werkzeug (2) gewählt wird (105), das dazu konfiguriert ist:
• das verteilten Steuerungssystem (5) aus Bausteinen in einem vorgegebenen Katalog zusammenzustellen, wobei mindestens ein solcher Baustein eine speicherprogrammierbare Steuerung (PLC) ist; und
• Anwendungscode zu erzeugen, der Steuercode für diesen PLC enthält.

5. Verfahren (100a, 100b) nach einem der Ansprüche 1 bis 4, ferner umfassend:
vor dem Neuerzeugen (180) des Anwendungscodes (3) Auffordern (170) eines Steuerungsingenieurs zur Genehmigung der Änderung und/oder Erweiterung (2a) für das Engineering-Tool (2).

6. Computerprogramm, das maschinenlesbare Anweisungen umfasst, die, wenn sie von einem oder mehreren Computern ausgeführt werden, den einen oder die mehreren Computer veranlassen, ein Verfahren (100a, 100b) nach einem der Ansprüche 1 bis 5 durchzuführen.

7. Nicht-transitorisches maschinenlesbares Speichermedium und/oder ein Download-Produkt mit dem Computerprogramm nach Anspruch 6.

8. Ein oder mehrere Computer, die zur Ausführung des Computerprogramms nach Anspruch 6 konfiguriert sind.

## Revendications

1. Procédé mis en œuvre par ordinateur (100a) pour modifier et/ou augmenter un outil d'ingénierie (2) qui est configuré pour générer un code d'application (3) qui, lorsqu'il est exécuté sur un ou plusieurs contrôleurs (4) dans un système de commande distribué (5) d'une installation industrielle (1), fait en sorte que l'installation industrielle (1) soit commandée selon une stratégie de commande qui est mise en œuvre dans le code d'application (3), le procédé comprenant :
• l'acquisition (110) de variables d'état (6) qui caractérisent un état opérationnel (1a) d'au moins une installation industrielle (1) ;
• l'acquisition (120) d'un ensemble d'événements d'interaction (7) d'au moins un opérateur d'installation interagissant avec le système de commande distribué (5) de l'installation industrielle (1) via une interface homme-machine ;
• la détermination (130), en fonction au moins en partie des événements d'interaction (7), des variables d'état (6) et éventuellement d'informations d'ingénierie données du système de commande distribué (5) en tant que données d'entrée, du fait qu'un ou plusieurs événements d'interaction (7) indiquent ou non que l'opérateur de l'installation exécute une tâche qui est:
• l'exécution manuelle d'une solution à un problème opérationnel qui n'est pas couvert par l'ingénierie actuelle du système de commande distribué (5) ; et/ou
• l'exécution répétitive d'une ou plusieurs actions à partir d'états opérationnels égaux ou essentiellement similaires (1a) ; et/ou
• l'accès à au moins une fonctionnalité dont l'accès nécessite au moins un nombre seuil d'étapes avec au moins une fréquence seuil ;
• et si cette détermination est positive, la mise en correspondance (140) des données d'entrée avec une modification et/ou une augmentation (2a) pour l'outil d'ingénierie (2) qui a généré le code d'application (3) pour le système de commande distribué (5),
et en outre
• la re-génération (180), par l'outil d'ingénierie modifié et/ou augmenté (2), du code d'application (3) pour le système de commande distribué (5), et
• l'exécution (190) du code d'application re-généré (3) dans le système de commande distribué (5),
pour ainsi commander une installation industrielle (1) selon la stratégie de commande mise en œuvre dans le code d'application re-généré (3),
de telle sorte que
• un nouvel élément de commande apparaisse dans une interface homme-machine du système de commande distribué (5) afin qu'une chaîne d'actions précédemment exécutée de manière répétitive, en séquence, par l'opérateur de l'installation, soit exécutée lors de l'actionnement de ce nouvel élément de commande ; et/ou
• un élément de commande dont l'accès nécessitait précédemment un premier nombre d'étapes bouge dans l'interface homme-machine de façon à ce que son accès nécessite un deuxième nombre, inférieur, d'étapes ; et/ou
• une ou plusieurs actions précédemment exécutées de manière répétitive par l'opérateur de l'installation à partir d'états opérationnels égaux ou essentiellement similaires (1a) soient exécutées automatiquement en réponse à la survenue d'un état opérationnel particulier (1a), de sorte que l'opérateur de l'installation soit moins fréquemment susceptible d'interagir manuellement avec le système de commande distribué, et/ou passe moins de temps à interagir avec le système de commande distribué.

2. Procédé (100a, 100b) selon la revendication 1, dans lequel les données d'entrée comprennent en outre une ou plusieurs données parmi :
• des alarmes et des événements rapportés par le système de commande distribué (5) ;
• un modèle topologique de l'installation industrielle (1) ;
• une implantation d'une interface homme-machine du système de commande distribué (5) ; et
• une logique de commande du système de commande distribué (5).

3. Procédé (100a, 100b) selon l'une quelconque des revendications 1 à 2, dans lequel la mise en correspondance (140, 160) comprend :
• la détermination (141, 161) d'une fonction dans une bibliothèque de commandes donnée qui donne un résultat essentiellement similaire au résultat d'une action ou une séquence d'actions détectée ; et
• le remplacement (142, 162), dans la modification et l'augmentation (2a) pour l'outil d'ingénierie (2), de l'action ou la séquence d'actions détectée par un appel de la fonction déterminée dans la bibliothèque de commandes.

4. Procédé (100a, 100b) selon l'une quelconque des revendications 1 à 3, dans lequel il est choisi (105) un outil d'ingénierie (2) qui est configuré pour :
• assembler le système de commande distribué (5) à partir de blocs de construction dans un catalogue prédéterminé, au moins l'un de ces blocs de construction étant un contrôleur logique programmable, PCL ; et
• générer un code d'application qui comprend un code de commande pour ce PLC.

5. Procédé (100a, 100b) selon l'une quelconque des revendications 1 à 4, comprenant en outre : avant la re-génération (180) du code d'application (3), la demande (170) à un ingénieur de contrôle d'approuver la modification et/ou l'augmentation (2a) pour l'outil d'ingénierie (2).

6. Programme informatique, comprenant des instructions lisibles par machine qui, lorsqu'elles sont exécutées par un ou plusieurs ordinateurs, amènent le ou les ordinateurs à exécuter un procédé (100a, 100b) selon l'une quelconque des revendications 1 à 5.

7. Support de stockage non transitoire lisible par machine, et/ou produit de téléchargement, contenant le programme informatique selon la revendication 6.

8. Un ou plusieurs ordinateurs configurés pour exécuter le programme informatique selon la revendication 6.
